# EUROPEAN PATENT APPLICATION

(11) **EP 4 572 055 A1**
(43) Date of publication of application: **18.06.2025**
(21) Application number: 23858693.7
(22) Date of filing: 24.04.2023
(51) Int. Cl.: H02H 11/00

(54) **PHOTOVOLTAIC SYSTEM AND CONTROL METHOD**

(30) Priority: 02.09.2022 CN 202211071565
(71) Applicant: Sungrow Power Supply Co., Ltd., Hefei, Anhui 230088 (CN)
(72) Inventor: XU, Anan, Hefei, Anhui 230088 (CN); WANG, Wubo, Hefei, Anhui 230088 (CN); ZHANG, Bing, Hefei, Anhui 230088 (CN); WANG, Changyou, Hefei, Anhui 230088 (CN)
(74) Representative: Zacco Norway AS
(86) International application number: PCT/CN2023/090214
(87) International publication number: WO 2024/045653

(57) **Abstract**

The present application discloses a photovoltaic system and a control method. The photovoltaic system comprises at least two photovoltaic strings, a power acquisition loop, a trip switch, a switch mode power supply, and a controller. The at least two photovoltaic strings are connected in series or in parallel; the trip switch is connected between the photovoltaic strings and an input end of a converter; the power acquisition loop is used for acquiring power from at least one photovoltaic string and supplying power to the switch mode power supply; the switch mode power supply is used for supplying power to the controller and the trip switch when the power acquisition loop supplies power normally; and the controller is used for controlling, when a wiring fault occurs to the at least two photovoltaic strings connected in parallel, the trip switch to be switched off. The power acquisition loop is specially provided, and the power acquisition loop can directly acquire power from the photovoltaic strings and supply power to the switch mode power supply. When the photovoltaic strings connected to the power acquisition loop are reversely connected, the switch mode power supply does not work, and the trip switch is not switched off, so that the reversely connected photovoltaic strings are not burnt out.

## Description

This application claims the priority to Chinese patent application No. 202211071565.X, entitled "PHOTOVOLTAIC SYSTEM AND CONTROL METHOD", filed on September 02, 2022 with the China National Intellectual Property Administration, which is incorporated herein by reference in its entirety.

### FIELD

This application relates to the technical field of new energy power generation, and in particular, to a photovoltaic system and a control method.

### BACKGROUND

With the continuous development of new energy, the application of photovoltaic power generation is becoming increasingly widespread at present. Generally, multiple photovoltaic module strings are connected in parallel. Each photovoltaic module string includes a plurality of photovoltaic modules connected in series, and each photovoltaic module includes a plurality of battery cells connected in series. Diodes are connected in inverse parallel between the positive/negative output terminals of the photovoltaic module and the corresponding cell connection points.

When multiple photovoltaic module strings are connected in parallel, if one or more of the photovoltaic module strings are reversely connected, the current of the correctly connected photovoltaic module strings will be fully injected into the reversely connected photovoltaic module strings after the switch is closed. When there is a reversely connected photovoltaic module string, the switching power supply of the photovoltaic system will fail to operate normally, and instructions for disconnecting the switch cannot be issued. In addition, the battery cells may be damaged if the reverse current is large.

### SUMMARY

In view of the above, the present application provides a photovoltaic system, a control method and a power supply system that are capable of avoiding the reversely connected photovoltaic module string from burning when there is a reverse connection of the photovoltaic module strings.

The present application provides a photovoltaic system, including at least two photovoltaic module strings, a power taking circuit, a trip switch, a switching power supply and a controller;
the at least two photovoltaic module strings are connected in parallel, and the trip switch is connected between the at least two photovoltaic module strings and an input end of a converter;
the power taking circuit is configured to take power from at least one of the at least two photovoltaic module strings and supply power to the switching power supply;
the switching power supply is configured to supply power to the controller and the trip switch when the power taking circuit provides power normally; and
the controller is configured to control the trip switch to be disconnected when there is a wiring fault in the at least two photovoltaic module strings connected in parallel.

In an implementation, the power taking circuit includes a positive power taking circuit and/or a negative power taking circuit;
the positive power taking circuit is connected to a positive electrode of the at least one of the at least two photovoltaic module strings, and the negative power taking circuit is connected to a negative electrode of the at least one of the at least two photovoltaic module strings.

In an implementation, the photovoltaic system further includes a bidirectional rectifier circuit;
the bidirectional rectifier circuit is connected between the power taking circuit and the switching power supply; and
the bidirectional rectifier circuit is configured to rectify an output voltage and an output current of the power taking circuit and provide a rectified output voltage and a rectified output current to the switching power supply.

In an implementation, the bidirectional rectifier circuit includes a first diode, a second diode, a third diode and a fourth diode;
a cathode of the first diode and a cathode of the second diode are connected to a positive end of the switching power supply, and an anode of the second diode and an anode of the first diode are respectively connected to the positive power taking circuit and the negative power taking circuit; and
a cathode of the third diode and a cathode of the fourth diode are respectively connected to the anode of the first diode and the anode of the second diode, and an anode of the third diode and an anode of the fourth diode are connected to a negative end of the switching power supply.

In an implementation, the photovoltaic system further includes a DC-DC conversion circuit, a fifth diode and a sixth diode, the DC-DC conversion circuit is connected between the trip switch and the switching power supply, a positive end of the DC-DC conversion circuit is connected to a positive end of the switching power supply through the fifth diode, and a negative end of the DC-DC conversion circuit is connected to a negative end of the switching power supply through the sixth diode.

In an implementation, when the at least two photovoltaic module strings are connected correctly, the one with higher voltage of the power taking circuit and the DC-DC conversion circuit supplies power to the switching power supply.

In an implementation, the power taking circuit further includes a maintenance switch;
the maintenance switch is connected between the at least two photovoltaic module strings and the bidirectional rectifier circuit, or the maintenance switch is connected between the bidirectional rectifier circuit and the switching power supply; and
when the trip switch is to be closed, the maintenance switch is first closed if the maintenance switch is disconnected and then the trip switch is closed.

In an implementation, the photovoltaic system further includes a seventh diode and an eighth diode;
the seventh diode is connected between a positive end of the maintenance switch and a positive input end of the bidirectional rectifier circuit, and the eighth diode is connected between a negative end of the maintenance switch and a negative input end of the bidirectional rectifier circuit.

In an implementation, both the controller and the switching power supply are provided inside the converter.

The present application further provides a photovoltaic system, including at least two sets of trip switches as follows: a first trip switch and a second trip switch, each of the at least two sets of trip switches includes a plurality of contacts, and each contact is connected to a corresponding photovoltaic module string;
the first trip switch is connected to positive electrodes of all photovoltaic module strings and negative electrodes of a subset of the photovoltaic module strings, and the second trip switch is connected to negative electrodes of a remaining photovoltaic module string,
   or,
the first trip switch is connected to negative electrodes of all photovoltaic module strings and positive electrodes of a subset of the photovoltaic module strings, and the second trip switch is connected to the positive electrodes of a remaining photovoltaic module string.

The present application further provides a photovoltaic system, including a switching power supply, a converter and a trip switch, wherein the trip switch includes a plurality of contacts and each of the contacts is connected to a corresponding photovoltaic module string;
a first end of the converter is connected to the photovoltaic module strings through the trip switch, and a second end of the converter is connected to the switching power supply; and
the trip switch is connected to one of the photovoltaic module strings, and the trip switch is then connected to the other photovoltaic module strings if the switching power supply works normally, and the trip switch is not connected to the other photovoltaic module strings corresponding to the trip switch if the switching power supply does not work.

The present application further provides a control method of a photovoltaic system, the photovoltaic system includes a converter, a power taking circuit, a trip switch and a switching power supply, an input end of the converter is connected to at least two photovoltaic module strings connected in parallel, through the trip switch, and the power taking circuit is configured to take power from at least one of the at least two photovoltaic module strings and supply power to the switching power supply,
the method includes:
supplying power, by the switching power supply, to the trip switch when the power taking circuit provides power normally;
closing the trip switch; and
controlling the trip switch to be disconnected when there is a wiring fault in the at least two photovoltaic module strings connected in parallel.

In an implementation, the photovoltaic system further includes a maintenance switch connected between the power taking circuit and the switching power supply; and
the method further includes:
closing the maintenance switch before closing the trip switch.

In an implementation, the photovoltaic system further includes a DC-DC conversion circuit and a DC-AC conversion circuit;
an input end of the DC-DC conversion circuit is connected to the trip switch, and an output end of the DC-DC conversion circuit is connected to the DC-AC conversion circuit;
the method further includes:
   disconnecting the maintenance switch when the DC-AC conversion circuit fails.

The present application further provides a control method of a photovoltaic system, the photovoltaic system includes at least two sets of trip switches as follows: a first trip switch and a second trip switch, each of the sets of trip switches includes a plurality of contacts, and each contact is connected to a corresponding photovoltaic module string;
the method includes:
controlling the first trip switch to connect to positive electrodes of all photovoltaic module strings and negative electrodes of a subset of the photovoltaic module strings, and controlling the second trip switch to connect to negative electrodes of a remaining photovoltaic string;
   or,
controlling the first trip switch to connect to negative electrodes of all photovoltaic module strings and positive electrodes of a subset of the photovoltaic module strings, and controlling the second trip switch to connect to the positive electrodes of a remaining photovoltaic module string.

The present application further provides a control method of a photovoltaic system, the photovoltaic system includes a switching power supply, a converter and a trip switch, the trip switch includes a plurality of contacts, each of the contacts is connected to a corresponding photovoltaic module string, a first end of the converter is connected to photovoltaic module strings through the trip switch, and a second end of the converter is connected to the switching power supply;
the method includes:
connecting the trip switch to one of the photovoltaic module strings;
connecting the trip switch to the other photovoltaic module strings if it is determined that the switching power supply works normally, and not connecting the trip switch to the other photovoltaic module strings if it is determined that the switching power supply does not work.

From above, the application has the following beneficial effects.

The photovoltaic system according to the application is specially provided with a power taking circuit. The power taking circuit can directly take power from the photovoltaic module strings and supply power to the switching power supply. When the photovoltaic module string connected to the power taking circuit is reversely connected, the switching power supply will not work, that is, the switching power supply will not supply power to the controller and the trip switch, so the trip switch will not be closed, and thus the reversely connected photovoltaic module strings will not burn. In addition, when the photovoltaic module strings connected to the power taking circuit are normal and there is no reverse connection, the switching power supply can work normally to supply power to the trip switch and the controller, and the trip switch can be closed. If the switching power supply supplies power to the trip switch and the controller and the photovoltaic module string connected to the trip switch has a wiring faulty after the trip switch is closed, the controller can control the trip switch to be disconnected, so as to prevent the reversely connected photovoltaic module string from burning.

### BRIEF DESCRIPTION OF THE DRAWINGS

FIG. 1 is a schematic diagram of a photovoltaic system according to the present application;
FIG. 2 is a schematic diagram of another photovoltaic system according to an embodiment of the present application;
FIG. 3 is a schematic diagram of another photovoltaic system according to an embodiment of the present application;
FIG. 4 is a schematic diagram of another photovoltaic system according to an embodiment of the present application;
FIG. 5 is a schematic diagram of another photovoltaic system according to an embodiment of the present application;
FIG. 6 is a schematic diagram of another photovoltaic system according to an embodiment of the present application;
FIG. 7 is a schematic diagram of connection of photovoltaic module strings according to an embodiment of the present application;
FIG. 8 is a schematic diagram of another connection of photovoltaic module strings according to an embodiment of the present application; and
FIG. 9 is a flow chart of a control method of a photovoltaic system according to an embodiment of the present application.

### DETAILED DESCRIPTION OF EMBODIMENTS

In order to enable the technical persons skilled in the art to better understand the technical solutions provided by the embodiments of this application, application scenarios of the technical solutions provided by this application are first described below.

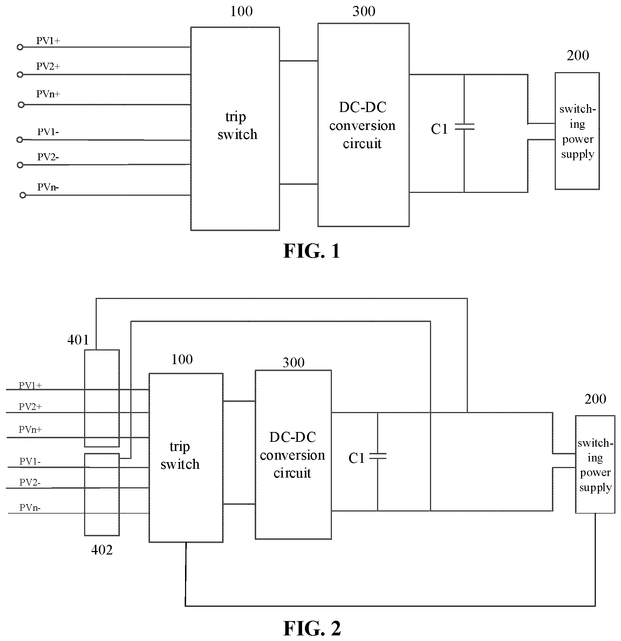

Refer to FIG. 1, which is a schematic diagram of a photovoltaic system according to the present application.

In addition to photovoltaic module strings, the photovoltaic system further includes a converter, a trip switch 100 and a switching power supply 200. The case that an input end of the trip switch 100 is connected to n photovoltaic module strings is taken as an example in FIG. 1. The n photovoltaic module strings are connected in parallel. That is, PV1+, PV2+, ... PVn+ are connected together, and PV1-, PV2-, ... PVn- are connected together.

Herein, description is provided by taking the converter that includes a DC-DC conversion circuit 300 as an example. However, it should be understood that the converter may include a DC-DC conversion circuit or a DC-AC conversion circuit.

In order to cut off the connection between the photovoltaic module strings and the downstream circuit thereof in time when the photovoltaic system fails, a trip switch 100 is set between the DC-DC conversion circuit 300 and the photovoltaic module strings. The trip switch 100 is also called as a release switch. The controller can control the trip switch 100 to be disconnected, but the trip switch 100 needs to be manually closed. The controller cannot control the trip switch 100 to close.

The switching power supply 200 is used as an auxiliary power supply of the photovoltaic system to take power from the DC-DC conversion circuit 300. The switching power supply 200 is used to supply power to the trip switch 100 and a control circuit (not shown in the drawings). For example, the control circuit generally includes the controller.

The switching power supply 200 may be a switching power supply inside an inverter.

An output end of the DC-DC conversion circuit 300 is connected to a capacitor C1.

The specific topology and operating principle of the DC-DC conversion circuit 300 is not specifically limited in the embodiments of the application.

The controller controls the trip switch 100 to be disconnected when there is a reversely connected photovoltaic module string, so as to protect the photovoltaic module string. However, when the photovoltaic system starts to work, the power supply of the switching power supply 200 comes from the photovoltaic module strings. Therefore, when the photovoltaic module strings have a wiring fault such as a reversely connected photovoltaic module string, the switching power supply 200 will not work. Therefore, the switching power supply 200 cannot supply power to the trip switch 100 and the controller, and the controller cannot control the trip switch 100 to be disconnected. Therefore, the protection to the reverse connection cannot be realized.

In order to solve the above technical problems, a photovoltaic system is provided according to the application, in which a power taking circuit is provided. The power taking circuit directly takes power from the photovoltaic module strings and supplies power to the switching power supply, without through the trip switch. When the power can be taken normally, the switching power supply can work normally, to supply power to the trip switch and the controller. When it is detected that there is a reversely connected photovoltaic module string after the trip switch is closed, the controller can control the trip switch to trip, that is, disconnect. When the power taking circuit can not take power normally, the switching power supply can not work and thus can not supply power to the trip switch and the controller, and the trip switch is not closed in this case, so protection to the reverse connection can also be achieved. That is, whether the photovoltaic module string connected to the power taking circuit is reversely connected or not, the protection to the reversely connected photovoltaic module string can be achieved. The effect is more obvious when the photovoltaic system includes three or more photovoltaic module strings. That is, when the photovoltaic system includes at least three photovoltaic module strings, the more the reversely connected photovoltaic module strings, the larger the reverse current will be, and the photovoltaic module strings are more easy to burn.

In order to make the above objects, features and advantages of this application more obvious and understandable, the present application are further explained in detail in conjunction with the attached drawings and specific embodiments.

Refer to FIG. 2, which is a schematic diagram of another photovoltaic system according to an embodiment of the present application.

The photovoltaic system in the embodiment includes a converter, a power taking circuit, a trip switch 100, a switching power supply 200 and a controller (not shown in the drawings).

Herein, the case that the converter includes a DCDC conversion circuit 300 is taken as an example. The power taking circuit includes a positive power taking circuit 401 and/or a negative power taking circuit 402. The specific implementation of the power taking circuit is not limited in the embodiments of this application. The power taking circuit may include only one of the positive power taking circuit 401 and the negative power taking circuit 402 or both of them. The following description is provided by taking the power taking circuit that includes a positive power taking circuit 401 and a negative power taking circuit 402 as an example.

The positive power taking circuit 401 is connected to a positive electrode of at least one of the photovoltaic module strings, and the negative power taking circuit 402 is connected to a negative electrode of at least one of the photovoltaic module strings.

An input end of the converter is connected to at least two photovoltaic module strings connected in parallel, through the trip switch 100. The case that the input end of the trip switch 100 is connected to n photovoltaic module strings is taken as an example in FIG. 2. The n photovoltaic module strings are connected in parallel. That is, PV1+, PV2+,... PVn+ are connected together and PV1-, PV2-,... PVn- are connected together.

The power taking circuit is used to take power from at least one photovoltaic module string and supply power to the switching power supply 200. In the figure, the power taking circuit takes power from the n photovoltaic module strings, that is, the positive power taking circuit 401 is connected to PV1+, PV2+, PVn+, and the negative power taking circuit 402 is connected to PV1-, PV2-, PVn-. It should be understood that the power taking circuit can be selected to take power from only some of the photovoltaic module strings in the case of meeting a voltage demand.

In addition to supplying power to the controller and the trip switch, the power taking circuit may also supply power to a sampling circuit and a communication circuit.

The switching power supply 200 is used to supply power to the controller and the trip switch 100 when the power taking circuit supplies power normally.

The controller is used to control the trip switch 100 to be disconnected when there is a wiring fault in at least two photovoltaic module strings connected in parallel.

The wiring fault in the photovoltaic module strings includes at least a reverse connection of the photovoltaic module strings, and there may also be other wiring faults such as a short circuit.

The photovoltaic system in the embodiment is specially provided with a power taking circuit. The power taking circuit can directly take power from the photovoltaic module strings and supply power to the switching power supply that supplies power to the controller and the trip switch 100.

When a photovoltaic module string connected to the power taking circuit is reversely connected, the switching power supply will not work, that is, the switching power supply will not supply power to the controller and the trip switch. Therefore, the trip switch will not be closed, and thus the reversely connected photovoltaic module string will not burn. In addition, when the photovoltaic module strings connected to the power taking circuit are normal and there is no reverse connection, the switching power supply can work normally to supply power to the trip switch and the controller, and the trip switch can be closed. If the switching power supply supplies power to the trip switch and the controller and a photovoltaic module string connected to the trip switch has a wiring fault after the trip switch is closed, the controller can control the trip switch to be disconnected, so as to prevent the reversely connected photovoltaic module string from burning.

The controller is used to control the trip switch 100 to be disconnected when there is a reversely connected photovoltaic module string in at least two photovoltaic module strings connected in parallel. That is, after the trip switch 100 is closed, the controller can control the trip switch 100 to trip when there is a reversely connected photovoltaic module string.

If the switching power supply 200 can not work normally, it indicates that there is a reversely connected photovoltaic module string, the power taking circuit can not supply power to the switching power supply 200, and the switching power supply 200 can not supply power to the controller and the trip switch 100. In this case, the trip switch 100 will not be closed, which can avoid panel burning caused by the reversely connected photovoltaic module string.

It should be understood that after the power taking circuit is connected to the photovoltaic module strings, the switching power supply will work normally after a preset period if the photovoltaic module strings are connected correctly, and the switching power supply cannot work normally after a preset period if a photovoltaic module string connected to the power taking circuit is reversely connected.

The technical solution provided by the embodiment of the application is mainly to ensure that the switching power supply can supply power normally when the photovoltaic module strings are connected to the inverter for the first time, and the controller can control the trip switch 100 to be disconnected when there is a reversely connected photovoltaic string, so as to protect the reversely connected photovoltaic module string from burning.

Another photovoltaic system will be described below in conjunction with the drawings. A bidirectional rectifier circuit is provided in the photovoltaic system, and thus the switching power supply can be supplied normally regardless of whether a photovoltaic module string connected to the power taking circuit is reversely connected.

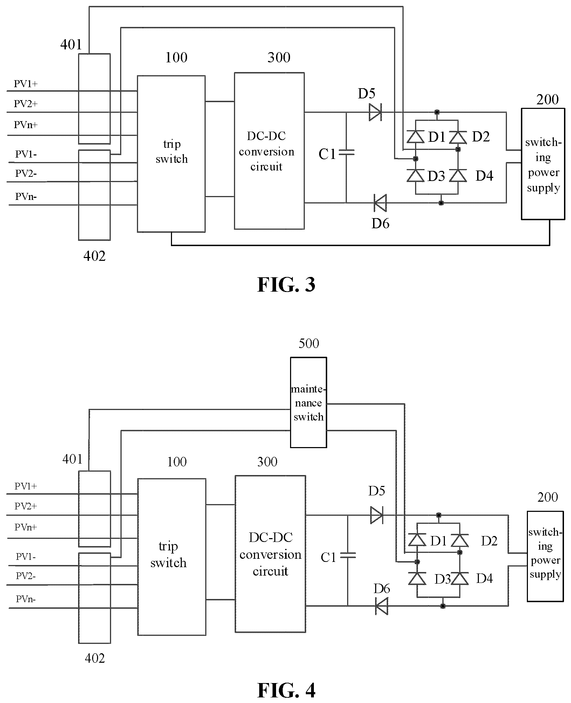

Refer to FIG. 3, which is a schematic diagram of another photovoltaic system according to an embodiment of the present application.

The photovoltaic system in the embodiment further includes a bidirectional rectifier circuit.

The bidirectional rectifier circuit is connected between the power taking circuit and the switching power supply 200.

The bidirectional rectifier circuit is used to rectify an output voltage and an output current of the power taking circuit and provide the rectified output voltage and the rectified output current to the switching power supply 200.

In a possible implementation, the bidirectional rectifier circuit includes a first diode D1, a second diode D2, a third diode D3 and a fourth diode D4.

A cathode of the second diode D2 and a cathode of the first diode D1 are connected to a positive end of the switching power supply 200, and an anode of the second diode D2 and an anode of the first diode D1 are connected to the positive power taking circuit 401 and the negative power taking circuit 402 respectively.

A cathode of the third diode D3 and a cathode of the fourth diode D4 are connected to the anode of the first diode D1 and the anode of the second diode D2 respectively, and an anode of the third diode D3 and an anode of the fourth diode D4 are connected to a negative end of the switching power supply 200.

It should be understood that the first diode D1, the second diode D2, the third diode D3 and the fourth diode D4 form a full-bridge rectifier bridge, and even if a photovoltaic module string connected to the power taking circuit is reversely connected, the reverse current can also be supplied to the switching power supply 200 through the bidirectional rectifier circuit. Thus, the switching power supply 200 can supply power to the trip switch 100 and the controller. If there is a reversely connected photovoltaic module string, the controller can control the trip switch 100 to be disconnected, that is, the trip switch 100 trips, to protect the reversely connected photovoltaic module string from burning.

In order to prevent the current output from the power taking circuit from flowing back into the DC-DC conversion circuit 300, the photovoltaic system in the embodiment of the application further includes a fifth diode D5 and a sixth diode D6. The DC-DC conversion circuit 300 is connected between the trip switch 100 and the switching power supply 200, a positive end of the DC-DC conversion circuit 300 is connected to a positive end of the switching power supply 200 through the fifth diode D5, and a negative end of the DC-DC conversion circuit 300 is connected to a negative end of the switching power supply 200 through the sixth diode D6.

It should be understood that the photovoltaic system shown in FIG. 2 can also include the diode D5 and the diode D6, and the specific connection relationship is the same as that of the diode D5 and the diode D6 in FIG. 3, which is not be repeated here.

In order to further ensure the safety of the photovoltaic system, the photovoltaic system in the embodiment of the application may further include a maintenance switch. Detailed description will be made below in conjunction with the drawings.

Refer to FIG. 4, which is a schematic diagram of another photovoltaic system according to an embodiment of the present application.

The photovoltaic system in the embodiment further includes a maintenance switch 500.

The maintenance switch 500 is connected between the power taking circuit and the bidirectional rectifier circuit. That is, a positive input end of the maintenance switch 500 is connected to the positive power taking circuit 401, and a negative input end of the maintenance switch is connected to the negative power taking circuit 402. A positive output end of the maintenance switch 500 is connected to a positive input end of the bidirectional rectifier circuit, and a negative output end of the maintenance switch 500 is connected to a negative input end of the bidirectional rectifier circuit.

When the trip switch 100 is to be closed, the maintenance switch 500 is first closed if the maintenance switch 500 is disconnected and then the trip switch 100 is closed. When the trip switch 100 is to be closed, the trip switch 100 is directly closed if the maintenance switch 500 is already closed. The maintenance switch 500 is a manual switch that needs to be closed or disconnected manually.

The maintenance switch 500 is arranged on the path that the power taking circuit supplies power to the switching power supply 200. After all the photovoltaic module strings are connected, the maintenance switch 500 is first closed, and the trip switch 100 is closed if the switching power supply 200 is normal after a preset period of time. After the trip switch 100 is closed, the controller can control the trip switch 100 to trip if there is a reversely connected photovoltaic module string.

When the downstream DC-AC conversion circuit needs to be maintained, the maintenance switch 500 can be manually disconnected to meet a safety requirement.

The type of the maintenance switch 500 is not specifically limited in the embodiment of the application. The maintenance switch may be a normally open switch or a normally closed switch.

To further prevent current backflow, two diodes may also be included between the maintenance switch 500 and the bidirectional rectifier circuit.

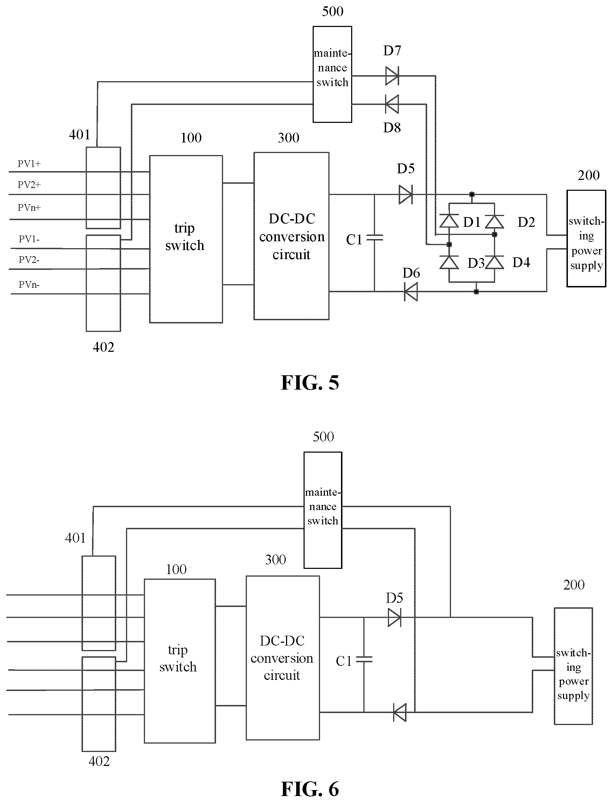

Refer to FIG. 5, which is a schematic diagram of another photovoltaic system according to an embodiment of the present application.

The photovoltaic system in the embodiment further includes a seventh diode D7 and an eighth diode D8.

The seventh diode D7 is connected between a positive end of the maintenance switch 500 and a positive input end of the bidirectional rectifier circuit, and the eighth diode D8 is connected between a negative end of the maintenance switch 500 and a negative input end of the bidirectional rectifier circuit.

It should be understood that when the photovoltaic module strings are connected to the inverter for the first time, the switching power supply can take power from the photovoltaic module strings or from the DC-DC conversion circuit 300. The specific implementation for taking power may be determined by voltage comparison. Due to the existence of D5 and D7, the one with higher voltage supplies power to the switching power supply 200. For example, if the output voltage of D7 is higher than the output voltage of D5, the photovoltaic module strings supply power to the switching power supply 200, and if the output voltage of D5 is higher than the output voltage of D7, the DC-DC conversion circuit 300 supplies power to the switching power supply 200. The DC-DC conversion circuit 300 can provide more stable power. The voltage of the photovoltaic module strings is easy to fluctuate with the natural environment.

The case that the photovoltaic system includes a bidirectional rectifier circuit and a maintenance switch is taken as an example in FIG. 4. It should be understood that the photovoltaic system in the embodiment of the application may include a maintenance switch and no bidirectional rectifier circuit. Descriptions will be given below in conjunction with the drawings.

It should be understood that FIG. 4 and FIG. 5 above are described with the maintenance switch being connected to the input end of the bidirectional rectifier circuit as an example. In addition, the maintenance switch may be connected to the output end of the bidirectional rectifier circuit, that is, between the bidirectional rectifier circuit and the switching power supply.

Refer to FIG. 6, which is a schematic diagram of another photovoltaic system according to an embodiment of the present application.

In the photovoltaic system in the embodiment, the maintenance switch 500 is connected between the power taking circuit and the switching power supply 200. That is, the positive input end of the maintenance switch 500 is connected to the positive power taking circuit 401, and the negative input end of the maintenance switch is connected to the negative power taking circuit 402. The positive output end of maintenance switch 500 is connected to the positive end of the switching power supply 200, and the negative output end of maintenance switch is connected to the negative end of the switching power supply 200.

For the photovoltaic system in the above embodiments of the application, the position of the switching power supply is not specifically limited, for example, the switching power supply may be located inside the inverter as a switching power supply in the inverter. Because the switching power supply can provide power normally, it can provide reliability of operation of the inverter.

In addition to the above photovoltaic system that can avoid the photovoltaic module string from burning, other implementations are also provided according to embodiments of the application, which will be described below in conjunction with the drawings.

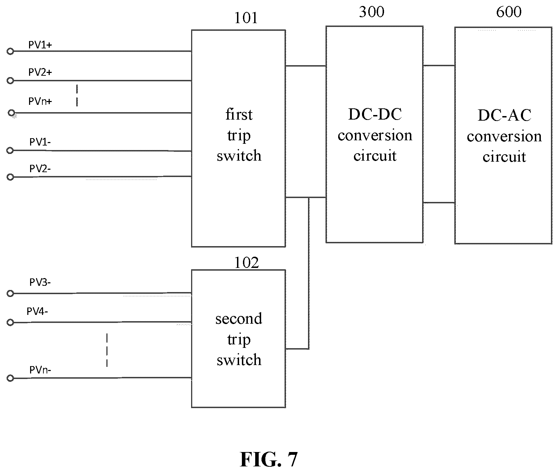

Refer to FIG. 7, which is a schematic diagram of connection of photovoltaic module strings according to an embodiment of the present application.

The photovoltaic system in the embodiment includes at least two sets of trip switches: a first trip switch and a second trip switch. Each of the sets of trip switches includes a plurality of contacts, and each of the contacts is connected to a corresponding photovoltaic module string.

The first trip switch is connected to positive electrodes of all of the photovoltaic module strings and negative electrodes of some of the photovoltaic module strings, and the second trip switch is connected to negative electrodes of the remaining photovoltaic strings.

Alternatively, the first trip switch is connected to the negative electrodes of all of the photovoltaic module strings and the positive electrodes of some of the photovoltaic module strings, and the second trip switch is connected to the positive electrodes of the remaining photovoltaic module strings.

As shown in FIG. 7, the positive electrodes of all of the photovoltaic module strings and the negative electrodes of some of the photovoltaic module strings are connected to one of the sets of trip switches, and the negative electrodes of the remaining photovoltaic module strings are connected to the other one of the sets of trip switches.

A single DC-DC conversion circuit corresponds to n photovoltaic module strings. The positive electrodes and the negative electrodes of the photovoltaic module strings PV1 and PV2 (PV1+, PV1-, PV2+, PV2-) are connected to the first set of trip switch 101, the positive electrodes of the remaining photovoltaic module strings PV3-PVn are connected to the first set of trip switch 101, and the negative electrodes of the remaining photovoltaic module strings PV3-PVn are connected to the second set of trip switches 102.

In the embodiment, the case that the inverter includes a DC-DC conversion circuit 300 and a DC-AC conversion circuit 600 is taken as an example.

When all the photovoltaic module strings are connected to the inverter, the first set of trip switch 101 is first closed, and after such as a preset time t, the other trip switch is closed if the switching power supply of the inverter works normally. If the switching power supply can not work normally, it indicates that the PV1 or PV2 is reversely connected and the remaining trip switches will not be closed. Since there are only at most two reversely connected photovoltaic module strings, the reverse current is not too large to cause battery panel damage.

In addition to the connection way shown in FIG. 7, the negative electrodes of all of the photovoltaic module strings and the positive electrodes of some of the photovoltaic module strings are connected to one set of trip switch, and the positive electrodes of the remaining photovoltaic module strings are connected to the other set of trip switch.

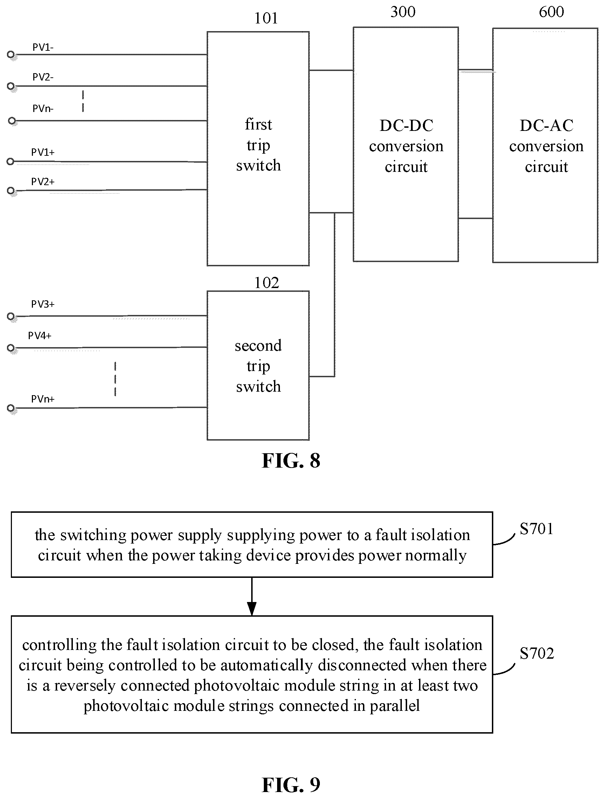

Refer to FIG. 8, which is a schematic diagram of another connection of photovoltaic module strings according to an embodiment of the present application.

A single DC-DC conversion circuit corresponds to n photovoltaic module strings. The positive electrodes and the negative electrodes of the photovoltaic module strings PV1 and PV2 (PV1+, PV1-, PV2+, PV2-) are connected to the first set of trip switch 101, the negative electrodes of the remaining photovoltaic module strings PV3-PVn are connected to the first set of trip switch 101, and the positive electrodes of the remaining photovoltaic module strings PV3-PVn are connected to the second set of trip switch 102.

The connection way shown in FIG. 8 can also have a protection function. The photovoltaic module strings will not burn since the reverse connection can not cause too large reverse current.

Conventionally the photovoltaic module strings corresponding to a same DC-DC conversion circuit are all connected to a same trip switch. When there are one or more reversely connected photovoltaic module strings, the current of the correctly connected photovoltaic module strings will all be injected into the reversely connected photovoltaic module strings, which will cause damage to the battery cell panels of the reversely connected photovoltaic module strings.

In the way provided by the embodiment, among the photovoltaic module strings corresponding to a same DC-DC conversion circuit, the positive electrodes and the negative electrodes of only one or two of the photovoltaic module strings and only one electrodes of some of the photovoltaic module strings are connected to the first set of trip switch, and the other electrodes of the remaining photovoltaic module strings are connected to the second set of trip switch, so as to ensure that only one or two photovoltaic module strings are connected to the inverter when closing the first set of trip switch, and if one or two photovoltaic module strings are reversely connected, the current of the reversely connected one or two photovoltaic module strings is not too large and the backflow current in the reversely connected battery cell panel will not damage the battery panel to cause the battery panel to burn.

In addition, another solution to avoid the reversely connected photovoltaic module strings from burning are provided according to embodiments of the application, which will be described in detail below.

The photovoltaic system in the embodiment includes a switching power supply, a converter and a trip switch. The trip switch includes a plurality of contacts, and each of the contacts is connected to a photovoltaic module string.

A first end of the converter is connected to the photovoltaic module strings through the trip switch, and a second end of the converter is connected to the switching power supply.

The trip switch is connected to one of the photovoltaic module strings, and the trip switch is then connected to other photovoltaic module strings if the switching power supply works normally, and the trip switch is not connected to the other photovoltaic module strings corresponding to the trip switch if the switching power supply does not work.

Even if there is a single reversely connected photovoltaic module string, the reverse connection current is very small. If the photovoltaic module string works normally, the single photovoltaic module string is used to power the switching power supply, and if there is a reverse connection, no power is supplied and other photovoltaic module strings are not connected to ensure the safety of the system.

On the basis of the photovoltaic systems in the above embodiments, a control method of a photovoltaic system is further provided according to embodiments of the application, which will be described in detail below in conjunction with the drawings.

Refer to FIG. 9, which is a flow chart of a control method of a photovoltaic system according to an embodiment of the present application.

A control method of a photovoltaic system is provided in the embodiment. The photovoltaic system includes a converter, a power taking circuit, a trip switch and a switching power supply. An input end of the converter is connected to at least two photovoltaic module strings connected in parallel through the trip switch. The power taking circuit is used to take power from at least one of the photovoltaic module strings and supply power to the switching power supply.

The method includes the following steps.

S701, the switching power supply supplying power to the trip switch when the power taking circuit provides power normally.
when the power taking circuit is connected to the photovoltaic module strings, if the connection of the photovoltaic module strings is normal, the switching power supply will work normally after a preset period, and if there is a reverse connection in the photovoltaic module string connected to the power taking circuit, the switching power supply can not work normally after a preset period and the trip switch will not be closed in this case, so the photovoltaic module string will not burn due to the reverse connection.

S702, controlling the trip switch to be closed; and controlling the trip switch to be disconnected when there is a wiring fault in the at least two photovoltaic module strings connected in parallel.

That is, as long as the controller and the trip switch 100 are powered by the switching power supply, the controller can control the trip switch 100 to trip, that is, to be disconnected, when there is a wiring fault such as a reverse connection of the photovoltaic module strings, after the trip switch 100 is closed.

Since the photovoltaic system is specially provided with a power taking circuit, the power taking circuit can directly take power from the photovoltaic module strings and supply power to the switching power supply.

When a photovoltaic module string connected to the power taking circuit is reversely connected, the switching power supply will not work, that is, the switching power supply will not supply power to the controller and the trip switch, so the trip switch will not be closed, and the reversely connected photovoltaic module string will not burn. In addition, when the photovoltaic module strings connected to the power taking circuit are normal and there is no reverse connection, the switching power supply can work normally and supply power to the trip switch and the controller, and the trip switch can be closed. If the switching power supply supplies power to the trip switch and the controller, the trip switch can be controlled to be disconnected if there is a wiring fault in the photovoltaic module strings connected to the trip switch after the trip switch is closed, so as to avoid the reversely connected photovoltaic module string from burning.

The photovoltaic system further includes a maintenance switch connected between the power taking circuit and the switching power supply.

The method further includes:
when the trip switch is to be closed, closing the maintenance switch first if the maintenance switch is disconnected and then closing the trip switch.

The photovoltaic system further includes a DC-DC conversion circuit and a DC-AC conversion circuit.

An input end of the DC-DC conversion circuit is connected to the trip switch, and an output end of the DC-DC conversion circuit is connected to the DC-AC conversion circuit.

The method further includes:
disconnecting the maintenance switch when the DC-AC conversion circuit fails.

The maintenance switch is provided to ensure that the photovoltaic system meets a safety requirement during maintenance. The maintenance switch is disconnected and maintenance can be carried out in the state of no power.

The above description of the disclosed embodiments enables persons skilled in the art to implement or use this application. Various modifications to these embodiments will be apparent to those skilled in the art, and the general principles defined herein may be implemented in other embodiments without departing from the spirit or scope of this application. Therefore, the application will not be limited to these embodiments shown herein, but will conform to the broadest scope consistent with the principles and novel features disclosed herein.

## Claims

1. A photovoltaic system, comprising at least two photovoltaic module strings, a power taking circuit, a trip switch, a switching power supply and a controller, wherein
the at least two photovoltaic module strings are connected in parallel, and the trip switch is connected between the at least two photovoltaic module strings and an input end of a converter;
the power taking circuit is configured to take power from at least one of the at least two photovoltaic module strings and supply power to the switching power supply;
the switching power supply is configured to supply power to the controller and the trip switch when the power taking circuit provides power normally; and
the controller is configured to control the trip switch to be disconnected when there is a wiring fault in the at least two photovoltaic module strings connected in parallel.

2. The photovoltaic system according to claim 1, wherein
the power taking circuit comprises a positive power taking circuit and/or a negative power taking circuit; and
the positive power taking circuit is connected to a positive electrode of the at least one of the at least two photovoltaic module strings, and the negative power taking circuit is connected to a negative electrode of the at least one of the at least two photovoltaic module strings.

3. The photovoltaic system according to claim 1 or 2, further comprising a bidirectional rectifier circuit, wherein
the bidirectional rectifier circuit is connected between the power taking circuit and the switching power supply; and
the bidirectional rectifier circuit is configured to rectify an output voltage and an output current of the power taking circuit and provide a rectified output voltage and a rectified output current to the switching power supply.

4. The photovoltaic system according to claim 3, wherein
the bidirectional rectifier circuit comprises a first diode, a second diode, a third diode and a fourth diode;
a cathode of the first diode and a cathode of the second diode are connected to a positive end of the switching power supply, and an anode of the second diode and an anode of the first diode are respectively connected to the positive power taking circuit and the negative power taking circuit; and
a cathode of the third diode and a cathode of the fourth diode are respectively connected to the anode of the first diode and the anode of the second diode, and an anode of the third diode and an anode of the fourth diode are connected to a negative end of the switching power supply.

5. The photovoltaic system according to any one of claims 1 to 4, further comprising: a DC-DC conversion circuit, a fifth diode and a sixth diode;
wherein the DC-DC conversion circuit is connected between the trip switch and the switching power supply, a positive end of the DC-DC conversion circuit is connected to a positive end of the switching power supply through the fifth diode, and a negative end of the DC-DC conversion circuit is connected to a negative end of the switching power supply through the sixth diode.

6. The photovoltaic system according to claim 5, wherein when the at least two photovoltaic module strings are connected correctly, the one with higher voltage of the power taking circuit and the DC-DC conversion circuit supplies power to the switching power supply.

7. The photovoltaic system according to claim 1, wherein the power taking circuit further comprises a maintenance switch, wherein
the maintenance switch is connected between the at least two photovoltaic module strings and the bidirectional rectifier circuit, or the maintenance switch is connected between the bidirectional rectifier circuit and the switching power supply; and
when the trip switch is to be closed, the maintenance switch is first closed if the maintenance switch is disconnected and then the trip switch is closed.

8. The photovoltaic system according to claim 5, further comprising: a seventh diode and an eighth diode;
wherein the seventh diode is connected between a positive end of the maintenance switch and a positive input end of the bidirectional rectifier circuit, and the eighth diode is connected between a negative end of the maintenance switch and a negative input end of the bidirectional rectifier circuit.

9. The photovoltaic system according to any one of claims 1 to 8, wherein both the controller and the switching power supply are provided inside the converter.

10. A photovoltaic system, comprising at least two sets of trip switches as follows: a first trip switch and a second trip switch, each of the at least two sets of trip switches comprises a plurality of contacts, and each contact is connected to a corresponding photovoltaic module string;
the first trip switch is connected to positive electrodes of all photovoltaic module strings and negative electrodes of a subset of the photovoltaic module strings, and the second trip switch is connected to negative electrodes of a remaining photovoltaic module string,
or,
the first trip switch is connected to negative electrodes of all photovoltaic module strings and positive electrodes of a subset of the photovoltaic module strings, and the second trip switch is connected to the positive electrodes of a remaining photovoltaic module string.

11. A photovoltaic system, comprising: a switching power supply, a converter and a trip switch, wherein
the trip switch comprises a plurality of contacts, and each of the contacts is connected to a corresponding photovoltaic module string;
a first end of the converter is connected to the photovoltaic module strings through the trip switch, and a second end of the converter is connected to the switching power supply; and
the trip switch is connected to one of the photovoltaic module strings, and the trip switch is then connected to the other photovoltaic module strings if the switching power supply works normally, and the trip switch is not connected to the other photovoltaic module strings corresponding to the trip switch if the switching power supply does not work.

12. A control method of a photovoltaic system, wherein the photovoltaic system comprises a converter, a power taking circuit, a trip switch and a switching power supply, an input end of the converter is connected to at least two photovoltaic module strings connected in parallel, through the trip switch, and the power taking circuit is configured to take power from at least one of the at least two photovoltaic module strings and supply power to the switching power supply; and
wherein the method comprises:
supplying power, by the switching power supply, to the trip switch when the power taking circuit provides power normally;
closing the trip switch; and
controlling the trip switch to be disconnected when there is a wiring fault in the at least two photovoltaic module strings connected in parallel.

13. The control method according to claim 12, wherein the photovoltaic system further comprises a maintenance switch connected between the power taking circuit and the switching power supply; and
wherein the method further comprises:
closing the maintenance switch before closing the trip switch.

14. The control method according to claim 12 or 13, wherein the photovoltaic system further comprises a DC-DC conversion circuit and a DC-AC conversion circuit;
wherein an input end of the DC-DC conversion circuit is connected to the trip switch, and an output end of the DC-DC conversion circuit is connected to the DC-AC conversion circuit; and
wherein the method further comprises:
disconnecting the maintenance switch when the DC-AC conversion circuit fails.

15. A control method of a photovoltaic system, wherein the photovoltaic system comprises at least two sets of trip switches as follows: a first trip switch and a second trip switch, each of the sets of trip switches comprises a plurality of contacts, and each contact is connected to a corresponding photovoltaic module string; and
wherein the method comprises:
controlling the first trip switch to connect to positive electrodes of all photovoltaic module strings and negative electrodes of a subset of the photovoltaic module strings, and controlling the second trip switch to connect to negative electrodes of a remaining photovoltaic string;
or,
controlling the first trip switch to connect to negative electrodes of all photovoltaic module strings and positive electrodes of a subset of the photovoltaic module strings, and controlling the second trip switch to connect to the positive electrodes of a remaining photovoltaic module string.

16. A control method of a photovoltaic system, wherein the photovoltaic system comprises a switching power supply, a converter and a trip switch, the trip switch comprises a plurality of contacts, each of the contacts is connected to a corresponding photovoltaic module string, a first end of the converter is connected to photovoltaic module strings through the trip switch, and a second end of the converter is connected to the switching power supply; and
wherein the method comprises:
connecting the trip switch to one of the photovoltaic module strings; and
connecting the trip switch to the other photovoltaic module strings if it is determined that the switching power supply works normally, and not connecting the trip switch to the other photovoltaic module strings if it is determined that the switching power supply does not work.
